# EUROPEAN PATENT SPECIFICATION

(11) **EP 0 631 982 B1**
(45) Date of publication and mention of the grant of the patent: **09.01.2002**
(21) Application number: 94109496.3
(22) Date of filing: 20.06.1994
(51) Int. Cl.: C01B 33/193, C08K 3/34, C09C 1/00, C08L 21/00

(54) **Silica based aggregates, elastomers reinforced therewith and tire with tread thereof**
Aggregate auf Kieselerdebasis, damit verstärkte Elastomere und Reifen mit Lauffläche daraus
Agregats basés sur la silice, élastomères renforcés à partir de ceux-ci et pneu ayant bande de roulement à base de ceux-ci

(30) Priority: 28.06.1993 US 83835
(43) Date of publication of application: 04.01.1995
(73) Proprietor: THE GOODYEAR TIRE & RUBBER COMPANY, Akron, Ohio 44316-0001 (US)
(72) Inventor: Zimmer, Rene Jean, L-1232 Howald (LU); Bernard, Yvon Andre, L-8552 Oberpallen (LU); Frank, Uwe Ernst, L-9080 Ettelbruck (LU); Lauer, Wolfgang, L-7723 Welsdorf (LU); Materne, Thierry Florent Edme, L-1248 Luxembourg (LU); Visel, Friedrich, L-7378 Bofferdange (LU)
(74) Representative: Barz, Peter, Dr.

(56) References cited:
- EP-A- 0 632 093
- EP-A- 0 632 094
- CH-A- 299 373
- US-A- 3 787 221
- US-A- 3 915 734

## Description

### Field

This invention relates to aggregates of particles of which a portion of the particles is of silicon dioxide and to elastomers reinforced therewith.

In one aspect, the invention relates to tires having rubber treads which are composed of such reinforced elastomers.

Silica, which is primarily composed of silicon dioxide, is often used to reinforce various elastomers, particularly when used in conjunction with a silica coupling agent, or silica coupler.

The silica, or silicon dioxide which is its major constituent, is typically used in the form of an aggregate of the fine silica particles which are bonded together due primarily to the manner in which they are prepared, particularly when the silica is prepared by a precipitation process. In such aggregate form, the primary silica particles are typically sufficiently bonded together so that even upon application of a relatively high shear mixing of silica/rubber mixtures, at least a portion of the aggregate structure remains and the aggregate is not completely broken down to its ultimate primary silica particles. This phenomenon is considered herein to be known to those skilled in the silica/rubber mixing art.

Therefore, silica typically used for rubber reinforcement purposes, while referred to as "silica", it might be more appropriately referred to as aggregates of silica particles.

In one aspect, the invention also relates to tires having rubber treads which are composed of elastomers which are reinforced with aggregates of silica particles of which at least a portion of the particles are of silicon dioxide.

### Background

Various rubber products, including tires and industrial products, are composed of elastomers, or blends of elastomers, which are conventionally reinforced with reinforcing particulate fillers to enhance their physical properties.

While carbon black is often used for such purpose, silica is also sometimes solely used or, alternatively, is used in conjunction with carbon black to reinforce the elastomers and/or to otherwise enhance their physical properties. The use of carbon black and/or silica to reinforce elastomers is well known to those having skill in such art.

Such silica is normally composed primarily of silicon dioxide which contains silanol groups on its surface as well as water of adsorption unless it is used in a dried or dehydrated form. While the silica can be, for example, of the pyrogenic or precipitated type, the precipitated silica is used in most applications.

As hereinbefore pointed out, for rubber reinforcement purposes, the silica, particularly precipitated silica, is generally considered to be in the form of aggregates of silica particles.

Thus, the term "silica", as may be referred to herein, is generally intended to mean aggregates of silica particles unless the primary silica particles are referenced.

In one aspect, in order to enhance the elastomer reinforcing effect of silica, a coupling agent, or silica coupler, is often used in conjunction with the silica. Such silica coupler is often composed of a moiety which is reactive towards the silanol groups present on the silicon dioxide surface and/or towards Si-O-Si groups, or any other active sites, such as, for example, an organosilane, and of a moiety which is reactive with the carbon-to-carbon double bonds of the elastomer such as, for example, a polysulfide or a mercaptan. The silica coupler, with one moiety reacted with the silica and one moiety reacted with the elastomer, then couples, or connects, the silica to the rubber in a manner which enables the silica to more effectively reinforce the rubber. Such use of silica couplers is considered to be well known to those having a skill in the silica reinforcement of rubber art.

Numerous coupling agents are taught for use in combining silica and rubber, such as for example, silane coupling agents which contain a polysulfide component, or structure, such as bis-(3-triethoxysilylpropyl) tetrasulfide. Such coupling agent has a silane moiety which is reactive with silicon dioxide of the silica and a tetrasulfide moiety which is reactive with carbon-to-carbon double bonds of a sulfur curable elastomer.
Dithiodipropionic acid, for example, may also be considered for use as a silica coupling agent either individually or, for example, in combination with the aforesaid silane tetrasulfide coupling agent.

Pneumatic rubber tires are conventionally prepared with a rubber tread which can be a blend of various rubbers, or elastomers, which may be reinforced with carbon black, silica or mixtures or carbon black and silica.

Various U.S. patents relating to silicas and silica reinforced tire treads include US-A-3,451,458; 3,664,403; 3,768,537; 3,884,285; 3,938,574; 4,482,663; 4,519,430; 4,590,052; 5,066,721; 5,089,554; EP-A-501227 and GB-A-1,424,503.

For tire treads, rubbers are conventionally evaluated, selected and blended for a purpose of achieving desired tire tread properties and particularly a balance of tire tread characteristic properties, mainly, rolling resistance, traction and wear.

The elastomer reinforcing ability of aggregates of silicon dioxide is often considered to be due to the size and shape of the aggregates, their surface activity and porosity as well as various chemical and physical interactions of the silica aggregates with silica couplers and/or elastomers.

The elastomer reinforcing ability of silica aggregates tend to be different among the various types of silica aggregates which can result in substantial variations in silica reinforced elastomer processing, prior to sulfur vulcanization of the elastomer, as well as properties of vulcanized silica reinforced elastomers. Such phenomena are well known to those having skill in the silica reinforced rubber art.

It is considered herein that an important disadvantage of many silica aggregates used for tire tread elastomer reinforcement is, for example, evidenced by a difficulty providing a silica reinforced elastomer for a tire tread which will demonstrate a suitable balance between tread wear, rolling resistance and traction properties for the tire.

It is further considered herein that silica aggregates used in elastomer reinforcement are sometimes observed to be difficult to disperse sufficiently homogeneously or sufficiently efficiently within the elastomer to provide a silica reinforced elastomer for a tire tread having a suitable balance between treadwear, rolling resistance and traction for a tire.

While the mechanism or theory relating to the relationship between dispersibility of various silica aggregates in various elastomers and resultant elastomer properties may not be fully understood, it is considered herein that characteristics of various silica aggregates themselves are involved or relate to such relationship.

Silicas are typically produced by one of three processes and are generally referred to by the general process in which they are produced, namely pyrogenic, gel and precipitated silicas. For elastomer reinforcement, precipitated silicas are usually preferred.

Pyrogenic or fumed silicas may be produced, for example, by a vapor process in which silicon tetrachloride vapor is reacted with oxygen and hydrogen at elevated temperatures.

Silica gels, which may be, for example, hydrogels, xerogels or aerogels, may be produced by reacting a soluble silicate such as sodium silicate with a strong sulfuric acid. The resulting gel is washed to remove residual salt, dried and then usually micronized by steam treatment to form a hydrogel. Aerogels may be similarly produced except that the water of the gel is replaced by an alcohol following which the gel is heated to remove the alcohol under super critical drying conditions (high pressure and high temperature into an autoclave). Contrary to aerogels, xerogels are not dried under super critical conditions. They are indeed inorganic hydrated oxide precipitated from an aqueous solution and dried in air or under a vacuum.

Precipitated silicas may be produced, for example, by forming a soluble silicate by reacting particles of silicon dioxide (e.g. sand) with a strong base, such as sodium hydroxide, to form after dissolution an aqueous silicate solution; followed by destabilizing the silicate solution by addition of an organic or mineral acid and/or acidifying gas such as carbon dioxide to change the pH of the mixture and cause a reaction to take place from which the silica is precipitated, substantially in the form of fine particles of silicon dioxide which may be in the aforesaid aggregate form and may appear in a gel-like form. The resulting slurry, or gel, is conventionally filtered and washed with water to remove the reaction by-product, which is the alkali metal salt of the acidification agent. The filter cake is then typically dried to yield a silica of desired aggregate particle size. There are many variations of the precipitation process involving, for example, sequential and/or intermittent additions of the silicate solution and/or acid, control of the pH, optionally stopping the acid addition and ageing of the mixture prior to resuming acid addition to reach the desired pH, ageing the gel or filter cake prior to washing with water which might sometimes be called post ageing and variations of various process temperatures and times.

A process of producing a silica may be found, for example, in EP-A-170579.

EP-A-632093 (priority date: 18.06.93; publication date: 04.01.95) and EP-A-632094 (priority date: 18.06.93; publication date: 04.01.95), both filed in the name of the applicant, disclose silica reinforced rubber compositions for tire treads which contain commercially available silicas and a silica coupler comprised of dithiodipropionic acid.

The physical characteristics of precipitated silicas, namely the aggregates thereof, can vary considerably as well as their use as reinforcement for elastomers and resulting elastomer properties according to the selection of silicate reaction materials and reaction conditions.

In one aspect, it is desired to provide an aggregate of particles for the reinforcement of elastomers which are somewhat similar to aggregates of silica particles except that a portion of the silicon present in the silicon dioxide particles has been replaced with other atoms and, further, that functional groups and/or polymers have been grafted to the silica surface and/or that the aggregate has been treated with a surfactant.

### Summary and Practice or the Invention

In accordance with this invention, a process of producing an aggregate of particles comprises the steps of:
(A) reacting at least two inorganic materials, in the presence of water, with a strong base to form an aqueous solution of a product thereof, wherein said inorganic materials are comprised of, based on 100 parts by weight thereof, (1) from 60 to 99.9 parts silicon dioxide and (2) from 0.1 to 40 parts of at least one additional inorganic material capable of forming said aqueous solution, said inorganic material being selected from (i) oxides of aluminum, iron, magnesium, boron, titanium, zirconium, zinc, vanadium and niobium, (ii) salts of aluminum, iron, magnesium, boron, titanium, zirconium, zinc, vanadium and niobium as phosphates, sulfates and halogenides thereof, and (iii) natural and synthetic aluminum silicates,
(B) treating said aqueous solution by the addition of a mineral acid to react with the said product and form a reaction product thereof and to reduce the pH of the solution and thereby produce precipitated particles of the reaction product as a precipitate, and
(C) optionally interrupting the said acid addition of step (B) to said aqueous solution to allow the said precipitate to age for a period of time, such as, for example, at a temperature of 15 to 50°C for a period of time of 7 to 120 minutes, before resuming the addition of acid, followed by adding additional acid until a desired pH is reached to complete the said reaction and precipitation of the reaction product;
(D) optionally, after said acid addition of step (B) and/or step (C) if used, is completed, allowing the precipitate to age for a period of time, for example, at a temperature of 15 to 50°C for a period of 7 to 180 minutes;
(E) filtering and washing the precipitate with water, for example tap-water or preferably deionized water, and drying the precipitate to recover the primary particles in a form of an aggregate thereof having a water of adsorption on the surface of the particles of the aggregate;
   wherein said process additionally comprises at least one of the following steps (F), (G) and (H):
(F) treating the said precipitate in step (B) and/or step (C) by the addition of at least one electrolyte having an anion selected from carbonate, silicate, aluminate, borate, alumo-silicate, phosphate, sulfate, halogenide, titanate and zirconate and a cation selected from at least one of lithium, sodium, potassium, magnesium and/or calcium;
(G) grafting onto said reaction product or precipitate, during and/or following step (E), at least one functional group and/or polymer, by a process of a reaction between the silanol groups, Si-O-Si groups and/or any other active sites on the surface thereof; wherein said functional group is provided by reacting therewith at least one of (i) a material of the type X and/or X-R, (ii) a material of the type X-R-Y, (iii) a material of the type X-R-Z and/or (X-R-Z)₂; wherein R is an aliphatic hydrocarbon radical having from 2 to 30 carbon atoms or an aromatic or hydrocarbon substituted aromatic radical having from 6 to 30 carbon atoms, X and Y are the same or different radicals selected from at least one of hydroxy, amino, alcoholate, cyanide, thiocyanide, halogen, sulfonic acid, sulfonic acid ester, thiol, benzoic acid, benzoic acid ester, carboxylic acid, carboxylic acid ester and organosilane radicals and Z is a radical selected from Sₙ and Seₙ, wherein n is an integer of from 2 to 6, or an unsaturated radical selected from allyl, vinyl, acryl and aryl radicals, and (iv) a material of formula:

   [(CH₃-CH₂-O)₃-Si-(CH₂)₃-S)]₂;

   and wherein said polymer is selected from at least one of natural or synthetic cis 1,4-polyisoprene rubber, cis 1,4-polybutadiene rubber, polystyrene, polychloroprene, polyacrylonitrile, styrene/butadiene copolymer rubber, butadiene/isobutylene copolymer rubber, EPDM rubber, styrene/isoprene/butadiene terpolymer rubber and isoprene/butadiene copolymer rubber;
(H) treating the said dried precipitate, following step (E), with at least one ionic and/or non-ionic surfactant.

In the practice of this invention, while various strong bases may be used, sodium hydroxide or sodium carbonate are preferred. While various mineral or organic acids may be used in the practice of this invention, hydrochloric acid and sulfuric acid are preferred.

In the practice of this invention, for step (A), the strong base is reacted with the aforesaid inorganic materials and a water solution is prepared of the product thereof. In one aspect, the strong base can be in a form of an aqueous solution thereof, thereby, in accordance with step (A), reacting the inorganic materials in the presence of water with the strong base to form the water solution of the product thereof.

An important aspect of the process of producing silica and the resulting primary particles and aggregates thereof is step (A) of the process in which additional inorganic materials such as aluminum, iron, magnesium, boron, titanium, zirconium, vanadium, niobium, and/or phosphorous atoms are introduced for partially replacing silicon atoms.

Thus, in one aspect of this invention, such additional inorganic material is at least one oxide and/or salt of aluminum, magnesium, iron, boron, titanium, zirconium, zinc, vanadium, niobium and phosphorus and including natural and synthetic aluminum silicates, of which the reaction with a strong base such as, for example, sodium hydroxide, forms a water soluble product thereof. The natural and/or synthetic aluminum silicates, which are generally well known, may be a particularly desirable additional inorganic material.

Representative examples of oxides and salts thereof are aluminum oxide, iron sulfate, magnesium sulfate, boron oxide, titanium dioxide and sodium phosphate and calcium phosphate.

It is considered herein that the overall reactivity of the aggregate as well as the aggregate size i.e. the number of particles building up the aggregates is believed to be largely determined by the amount of so-called replacement of the silicon atoms.

The reactivity as well as the aggregate size will be mainly determined by the amount of Al and the process of production. In addition to or as replacement for Al other elements such as Mg, B, Fe, P and S can be introduced to tailor the silica towards optimal performance to the selected elastomer.

The composition of the silica is transformed by this modification from a pure composition of the type (SiO₂) x (H₂O) y. Such modification is described in Chemistry of the Elements, by N.N. Greenwood and A. Earnshaw, Pergamon Press 1985, pp 397.

(ii) Treatment by an electrolyte is accomplished by addition to the batch in step (B) or (C) which is before or during the precipitation step and is considered beneficial for aggregate size and aggregate size distribution control which it is believed are important for enhanced filler dispersion within an elastomer.

(iii) Grafting functional group(s) and/or selective polymer(s) onto the silica surface is considered herein to improve or enhance the interaction between the aggregate of primary particles and an elastomer, or rubber, for which it is desired that the aggregate act as a reinforcement therefor, from both a chemical and a physical standpoint. Such improvements are considered herein to be provided by one or more of three types of mechanisms.

First, grafting a chemical, or polymer, with a polar group at one end and an apolar organic group at the other end may be considered. The reaction of the polar group of the grafting material with the silica is considered herein to tend to hydrophobize the silica or the silica modified according to steps (i) and (ii) hereinbefore mentioned and improve its compatibility with the bulk elastomeric matrix by improved van der Waals interactions, thereby decreasing polarity of the silica surface and improving its dispersibility in said matrix.
Representative of such chemicals and polymers are of the type X-R, in which R is an aliphatic hydrocarbon radical from 2 to 50, preferably 2 to 30, carbon atoms or an aromatic or hydrocarbon substituted aromatic radical having from 6 to 30 carbon atoms and X is a radical selected from at least one of hydroxy, amino, alcoholate, cyanide, thiocyanide, halogenide, sulfonic acid, sulfonic acid esters, thiols, carboxylic acid and carboxylic acid esters. More specific representative examples thereof are neodecanoic acid, octylcyanide, octylthiocyanide, n-butanol, butylamine and acetylacetone.

Secondly, replacing the silanol groups, Si-O-Si groups or any other active sites on the surface of the silica particles by another polar group is considered herein to change the reactivity and overall polarity of the silica particle surface may be considered. Representative of such chemicals are of type X-Y and X-R-Y where R is an aliphatic hydrocarbon radical, or from 2 to 50, preferably 2 to 30, carbon atoms or an aromatic or hydrocarbon substituted aromatic radical having from 6 to 30 carbon atoms and X and Y are the same or different and are selected from the aforesaid X radicals. More specific representative examples thereof are adipic acid, hexane diol, pentanediamine, ethanolamine, and 3-nitrilo-propionic acid ester.

Thirdly, a reaction of the silanol groups, Si-O-Si or any other active sites on the surface of the silica particles with dedicated coupling molecules, which in turn, are considered herein to create a hydrophobized surface on the silica particles, which is then able to further react with the polymeric phase. Representative of such types of chemicals, or units are X-R-Z or (X-R-Z)₂, where R is an aliphatic hydrocarbon radical, or chain, having from 2 to 50, preferably 2 to 30, carbon atoms or an aromatic radical or hydrocarbon substituted aromatic radical having from 5 to 50, preferably 6 to 30 carbon atoms, X is a radical as a hereinbefore described X radical, and Z is a radical selected from at least one of Sₙ (a polysulfide), Seₙ (a polyselenide), where n is an integer of 2 to 6, or an unsaturated radical selected from at least one of allyl, vinyl, acryl, and aryl radicals. More specific representative examples thereof, for instance, are ((CH₃-CH₂-O)₃-Si-(CH₂)₃-S-S)₂, ((CH₃-CH₂-O)-Si-(CH₂)₃-Se-Se)₂, ((CH₃-CH₂-O)₃-Si-(CH₂)₃-S)₂ and 1-acetyl-3-allyl propane.

(iv) treating the surface of the precipitate, or aggregate, with a non-ionic and/or ionic surfactant is considered herein to be beneficial to aid in the processability and dispersibility of the aggregate in a hydrophobic polymeric matrix such as, for example rubber and elastomers such as, for example, those previously set forth. The treatment may be accomplished, for example, by treating the dried precipitate, or aggregate, by making a reversible adsorption of the polar end(s) of an organic molecule, namely a surfactant. This might be done, for example, by mixing the dried aggregate together with the surfactant in a suitable reactor. Representative of such type of processing aid are of general type M-R-N of which R is an aliphatic hydrocarbon radical, or chain, having from 5 to 100, preferably 10 to 30, carbon atoms, or an aromatic radical or hydrocarbon substituted aromatic radical having from 5 to 50, preferably from 6 to 30 carbon atoms. M and N are the same or different moieties belonging to the families of for example, amine, polyalcohols, polyamines and polyethers which characteristically do not react or react only slowly with silanols. By "not reacting with the silanols" it is meant herein that where there may be a capability of reaction with silanols, the reaction is considered herein to be of a reversible type of interaction between silanols and the surfactant. Formation of a hydrogen bridge would be a representative example. In that sense, it is considered herein that there is no substantially irreversible chemical link between the SiO₂ and the surfactant. Representative examples thereof are polyethyleneglycol, polyethyleneglycol ether, polyamines, and aminoalcohols which are commercially available surfactants known to those skilled in the art.

The surfactant may be of a commercially available type, including for example, alkylbenzene sulfonate, alcohol sulfate, alcohol ether sulfate, alcohol ethoxylate, alkylphenol ethoxylates, fatty acid alkanolamines, or fatty acid amine oxides.

In the practice of this invention, for step (A) of the process, the aluminum, iron, magnesium, boron, titanium, zirconium, vanadium, niobium and phosphorus can be introduced as, for example, as oxide or salt thereof, so long as the requirement that the reaction thereof, in the presence of water, with a strong base produces a aqueous solution of a product thereof. Representative examples are salts selected from at least one of carbonate, silicate, aluminate, borate, alumino-silicate, phosphate, sulfate, halogenide either pure or in the hydrogenated form, e.g. NaHSO₄, KH₂PO₄ or Na₂H₂SiO₄. Combinations of the salts or mixed salts, eg. (NaH₂PO₄)ₓ * (CaF₂)_{y} may also be used. The cation of the salt is considered herein to be also of some importance and may be of any suitable element and is more preferably selected from the alkali or earth alkaline group of the periodic system such as, for example, Na, K, Ca, Mg, Li; others could be Zr, Fe, etc. to preferably produce a water soluble salt thereof upon addition of sodium hydroxide. Thus, representative examples of such salts are iron sulfate, magnesium sulfate, calcium chloride, potassium phosphate, zirconium sulfate, titanium dioxide and zinc oxide.

For the grafting step (G), the grafting of functional groups onto one or more particles of the aggregate may be accomplished through chemical bonding between any coupling agent described in the literature for SiO₂ and reinforcing filler which will provide the functional groups. Representative of such types of chemicals are of types X-R-Z or (X-R-Z)₂. (X-R-Z)₂ is a symmetrical molecule e.g. X-R-Z-Z-R-X, wherein X is a radical selected from at least one of alcohol, amino, cyanide, thiocyanide, halogen, hydroxyl, sulfonic acid esters, sulfonic acid sulfonates, carboxylic acid, carboxylic acid esters and organosilane radicals; wherein R is an aliphatic hydrocarbon radical having from 1 to 50 carbon atoms or an aromatic hydrocarbon radical having from 6 to 60 carbon atoms; and wherein Z represents Sₙ (a polysulfide), Seₙ (a polyselenide); wherein n is an integer of from 1 to 6. A specific example of the symmetrical molecules X-R-Z-Z-R-X is bis-(3-triethoxysilylpropyl)tetrasulfide[(CH₃-CH₂-O)₃-Si-(CH₂)₃-S-S-S-S-(CH₂)₃-Si-(O-CH₂-CH₃)₃ or ((CH₃-CH₂-O)₃-Si-(CH₂)₃-S-S)₂]. Z may also be an unsaturated radical as described in standard textbooks, representative materials of which are, for example, allyl radicals having from 4 to 10 carbon atoms, vinyl radicals having from 4 to 10 carbon atoms, acryl radicals having from 8 to 30 carbon atoms, aryl radicals having from 8 to 30 carbon atoms, pyridyl radicals having from 8 to 30 carbon atoms and piperidine radicals in which x is an integer of from 1 to 8, preferably from 3 to 6. Various of the chemicals above-mentioned can be prepared following the methods described, for example, in Angewandte Chemie, Vol.25, N.23, 1986, pp.236 by U.Deschler, P.Kleinschmidt, P.Panster. Representative examples thereof are ((CH₃-CH₂-O)₃-Si-(CH₂)₃-S-S)₂; ((CH₃-CH₂-O)₃-Si-(CH₂)₃-Se-Se)₂; ((CH₃-CH₂-O)₃-Si-(CH₂)₃-S)₂ and 1-acetyl-3-allyl propane.

It is considered herein that the size and shape of the primary particles which can be round or jagged, and that the size distribution of the primary particles as well as of the aggregates and of the pores are as important as the types and amounts of functional groups attached to the surface of the primary particles.

Such properties of the primary particles and aggregates thereof are considered herein to be suitably obtained by control of the materials utilized, the process of precipitation and the drying process.

In the practice of the invention, the aggregates may be used as reinforcing filler for various solution polymerization prepared as well as emulsion polymerization prepared diene based elastomers such as, for example, cis 1,4-polyisoprene rubber-natural and synthetic, cis 1,4-polybutadiene rubber, styrene/butadiene copolymer rubber, butadiene/isobutylene copolymer rubber, EPDM rubber, styrene/isoprene/butadiene terpolymer rubber, butadiene/acrylonitrile rubber, 3,4-polyisoprene rubber and isoprene/butadiene copolymer rubber.

In most cases, it is desired to use the aggregates of this invention as such or in combination with a silica coupler for the purpose of reinforcing a diene based elastomer.

Thus, in one aspect of the invention, a rubber composition, and tire having a rubber tread comprised of such composition, is provided which is comprised of (A) 100 parts by weight of at least one diene based elastomer, (B) 5 to 100, preferably 60 to 90, parts by weight of an aggregate of this invention and (C) a silica coupler having a moiety reactive with silicon dioxide and a moiety reactive with the said elastomer, which might be generally be thought as being reactive with the carbon-to-carbon double bonds of the elastomer.

The aggregate produced by the described methods is hygroscopic and sensitive to water and humidity. It is normally recommended, especially where the dried surface of the aggregate (particles) is treated by surfactant(s), that the aggregates be packed in sealed, weighed, bags for prevention of contamination by water, humidity and/or other material from the environment. Such protected aggregates are considered herein to provide good dispersion, reactivity and stability for use in the reinforcement of elastomers.

In one aspect of the invention, it is desired that the aggregate have at least one of the following physical parameters to be suitable for use as reinforcement for elastomers:
a) a BET-SSA surface area of from 100 to 500, preferably 150 to 300, m²/g;
b) a Hg-SSA from 100 to 300 m²/g and preferably 120 to 200 m²/g;
c) a Hg total introducible volume from 1.3 to 3.0 and preferably from 1.5 to 1.9 cm³/g.
d) a Hg-pore distribution for the primary particles of the aggregate with 0 to 5% of its pores having a diameter of less than 10; 60 to 90% of its pores having a diameter of 10 to 100 nm; 10 to 30% of its pores having a diameter of 100 to 1000 nm; and 5 to 20% of its pores having a diameter greater than about 1000 nm; and
e) a CTAB surface area of from 100 to 300, preferably 120 to 190.m²/g.

It is considered herein that the aggregates of this invention may also be, in general, typically characterized by having a projected area of the silica aggregates ranging between 1,000 and 20,000 x 10⁻¹⁸m² and preferably 2000 to 10,000 x 10⁻¹⁸ m²).

The projected area of an aggregate can be determined, in general, by ASTM test No. D3849. In particular a transmission electron microscope can be used, with a magnification of 150,000x at 120 kilovolts, coupled with an on-line image analyzer. Sample preparation is considered important. In particular, a sample can be prepared by the steps of dispersing 10 mg of aggregate in a 30 ml mixture of 10 ml of water and 20 ml isopropyl alcohol in a glass beaker of 250 ml capacity, for example. The beaker is positioned within the ultrasonic device and operated at a temperature of about 25°C., a frequency of about 55 kHz and an energy level of about 100 W for 1 hour. One drop is then dried on a Formvar (a trademark of the Monsanto Company) coated grid. The Formvar grid is obtained from Balzers as item number BU-006-034-T. The projected area is typically determined as an average of least 2,000, preferably at least 8,000, aggregates and reported in terms of square meters (for example, 10⁻¹⁸ m²).

In case of surface treated aggregates by a chemically bonded material of type X-R, X-R-Y, X-R-Z and (X-R-Z)₂ described hereinbefore, the percentage of the CTAB surface area of the aggregate which has reacted with the substituent should be from 1 to 100, and preferably from 2 to 50 percent.

In case of the detergent treated aggregate, of step H herein, the detergent content should be comprised from 0.1 to 50, preferably 2 to 20 percent of the silica weight. In this manner, it is considered herein that the associated water of absorption on the surface of the aggregate is somewhat replaced by the detergent.

The density of the aggregates of this invention is considered herein to be typically in a range of 0.1 to 3.0 g/cm3. It is considered herein that very low density aggregates are beneficial to reduce somewhat significantly the weight of aggregate reinforced elastomers which can be an important consideration in various manufactured products such as for example rubber tires, including the treads of tires.

Several of the above referenced characteristics of the aggregates may suitably be determined as follows:
a) the CTAB surface area is the external surface area as evaluated by cetyl trimethylammonium bromide with a pH of 9. The method is described in ASTM D 3849-80 for set-up and evaluation. The CTAB surface area is a well known characterization of silica.
b) the Hg surface area/porosity is the specific surface area determined by Mercury porosimetry (porosimeter used: CARLO-ERBA, Porosimeter 2000). The mercury is penetrated into the pores of the sample after a proper thermal treatment to remove volatiles. Set-up conditions may be suitably described as using a 100 mg sample; removing volatiles during 2 hours at 105 C and ambient atmospheric pressure; ambient to 2000 bars pressure measuring range. Such evaluation may be performed according to the method described in Winslow, Shapiro in ASTM bulletin, p.39 (1959); and
c) the BET surface values may be obtained using the method described in Brunnauer, Emmet, Teller Journal of the American Chemical Society, Vol.60, p.309 (1938). Set-up conditions may be suitably described as using a 500 mg of sample; first degassing 2 hours at 105°C, ambient pressure; and a second degassing for 1 hour at 150°C at 10⁻³ mm Hg. The BET surface area is a well known characterization of particles and aggregates of various materials including silicas.

In further accordance with this invention, a pneumatic tire is provided having a tread comprised of (A) 100 parts by weight of at least one diene based elastomer, (B) 5 to 100, preferably 30 to 90, phr of an aggregate material which is a material comprised of 50 to 100, preferably 100, weight percent of the aggregate of this invention and correspondingly, zero to 50 weight percent silica, (C) at least one silica coupler having a moiety reactive with silicon dioxide and a moiety reactive with said elastomer, in a weight ratio of aggregate and silica, if silica is used, to coupler of 7/1 to 15/1, and (D) 0 to 80, preferably 0 to 30, and more preferably 5 to 30, phr carbon black, wherein the weight ratio of aggregate and silica, if silica is used, to carbon black, where carbon black is used, is at least 0.1/1, preferably at least 3/1, more preferably at least 10/1 and generally from 3/1 to about 30/1 and where the total of aggregate and silica, if silica is used, and carbon black, if carbon black is used, is 60 to 120, preferably 70 to 90 phr.

The term "phr" as used herein, and according to conventional practice, refers to "parts of a respective material per 100 parts by weight of rubber".

Various commercially available silicas may also be mixed with the aggregates of this invention for the reinforcement of the diene based elastomers. Such silicas are typically characterized by the aforesaid BET and CTAB surface areas. Representative of such silicas, for example, only and without limitation, are silicas available from PPG Industries under the Hi-Sil trademark with designations 210, 243, etc; silicas available from Rhone-Poulenc, with designations of Z1165MP and Z165GR, silicas available from Degussa AG with designations VN2 and VN3, and silicas available from AKZO Chemie.

In the practice of this invention, it is preferred that the aggregate material of the (B) component of the tire tread is a material which consists essentially of the aggregate of this invention. Thus, in this sense, for this preferred aspect of the invention, while the aggregate may contain a very minor amount of silica (eg. less than about 10 percent by weight), it is primarily and essentially, or practically, about 100 percent of the aggregate of this invention.

It is readily understood by those having skill in the art that the rubber composition of the tread rubber would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

The presence and relative amounts of the above additives are not considered to be an aspect of the present invention which is more primarily directed to the utilization of the aggregates of this invention for the reinforcement of elastomers and to tires with treads composed of such reinforced elastomers.

The tires can be built, shaped, molded and cured by various methods which will be readily apparent to those having skill in such art.

## Claims

1. A process of producing an aggregate of particles comprising the steps of:
(A) reacting at least two inorganic materials, in the presence of water, with a strong base to form an aqueous solution of a product thereof, wherein said inorganic materials are comprised of, based on 100 parts by weight thereof, (1) from 60 to 99.9 parts silicon dioxide and (2) from 0.1 to 40 parts of at least one additional inorganic material capable of forming said aqueous solution, said inorganic material being selected from (i) oxides of aluminum, iron, magnesium, boron, titanium, zirconium, zinc, vanadium and niobium, (ii) salts of aluminum, iron, magnesium, boron, titanium, zirconium, zinc, vanadium and niobium as phosphates, sulfates and halogenides thereof, and (iii) natural and synthetic aluminum silicates,
(B) treating said aqueous solution by the addition of a mineral acid to react with the said product and form a reaction product thereof and to reduce the pH of the solution and thereby produce precipitated particles of the reaction product as a precipitate, and
(C) optionally interrupting the said acid addition of step (B) to said aqueous solution to allow the said precipitate to age for a period of time before resuming the addition of acid, followed by adding additional acid until a desired pH is reached to complete the said reaction and precipitation of the reaction product;
(D) optionally, after said acid addition of step (B) and/or step (C) if used, is completed, allowing the precipitate to age for a period of time;
(E) filtering and washing the precipitate with water and drying the precipitate to recover the primary particles in a form of an aggregate thereof having a water of adsorption on the surface of the particles of the aggregate;
wherein said process additionally comprises at least one of the following steps (F), (G) and (H):
(F) treating the said precipitate in step (B) and/or step (C) by the addition of at least one electrolyte having an anion selected from carbonate, silicate, aluminate, borate, alumo-silicate, phosphate, sulfate, halogenide, titanate and zirconate and a cation selected from at least one of lithium, sodium, potassium, magnesium and/or calcium;
(G) grafting onto said reaction product or precipitate, during and/or following step (E), at least one functional group and/or polymer, by a process of a reaction between the silanol groups, Si-O-Si groups and/or any other active sites on the surface thereof; wherein said functional group is provided by reacting therewith at least one of (i) a material of the type X and/or X-R, (ii) a material of the type X-R-Y, (iii) a material of the type X-R-Z and/or (X-R-Z)₂; wherein R is an aliphatic hydrocarbon radical having from 2 to 30 carbon atoms or an aromatic or hydrocarbon substituted aromatic radical having from 6 to 30 carbon atoms, X and Y are the same or different radicals selected from at least one of hydroxy, amino, alcoholate, cyanide, thiocyanide, halogen, sulfonic acid, sulfonic acid ester, thiol, benzoic acid, benzoic acid ester, carboxylic acid, carboxyfic acid ester and organosilane radicals and Z is a radical selected from Sₙ and Seₙ, wherein n is an integer of from 2 to 6, or an unsaturated radical selected from allyl, vinyl, acryl and aryl radicals, and (iv) a material of formula: [(CH₃-CH₂-O)₃-Si-(CH₂)₃-S)]₂; and wherein said polymer is selected from at least one of natural or synthetic cis 1,4-poiyisoprene rubber, cis 1,4-polybutadiene rubber, polystyrene, polychloroprene, polyacrylonitrile, styrene/butadiene copolymer rubber, butadiene/isobutytene copolymer rubber, EPDM rubber, styrene/isoprene/butadiene terpolymer rubber and isoprene/butadiene copolymer rubber;
(H) treating the said dried precipitate, following step (E), with at least one ionic and/or non-ionic surfactant.

2. The process of claim 1 wherein, in step (A), said strong base is sodium hydroxide.

3. The process of claim 2, wherein, in step (A), said silicon dioxide is reacted with sodium hydroxide to form an aqueous solution of a product thereof, and said at least one additional inorganic material is introduced in said reaction step (A) to form a product with silicon atoms being partially replaced thereby.

4. The process of any of claims 1-3 wherein, for step (A), said additional inorganic material is selected from at least one of oxides of aluminum, zinc, boron and titanium.

5. The process of any of claims 1-3 wherein, for step (A), said additional inorganic material is aluminum sulfate.

6. The process of any of the preceding claims wherein said mineral acid is sulfuric acid.

7. The process of any of the preceding claims wherein step (C) is required.

8. The process of claim 7 wherein said precipitate is allowed to age at a temperature in a range of about 15°C to 50°C for a period of 7 to 120 minutes before resuming the addition of acid.

9. The process of any of the preceding claims wherein step (D) is required.

10. The process of claim 9 wherein after said acid addition of step (B) said precipitate is allowed to age for a period of time.

11. The process of claim 9 wherein after said acid addition of step (C) said precipitate is allowed to age for a period of time.

12. The process of claim 10 or 11 wherein said precipitate is allowed to age at a temperature in a range of about 15°C to 50°C for a period of 7 to 180 minutes.

13. The process of any of the preceding claims wherein step (F) is required.

14. The process of claim 13 wherein during the precipitation step (B) an electrolyte treatment is provided wherein said electrolyte has an anion selected from carbonate, aluminate, phosphate and sulfate and a cation selected from sodium and potassium.

15. The process of claim 13 wherein during the precipitation step (C) an electrolyte treatment is provided wherein said electrolyte has an anion selected from carbonate, aluminate, phosphate and sulfate and a cation selected from sodium and potassium.

16. The process of any of the preceding claims wherein in step (G), after step (E), a functional group is grafted onto said reaction product or precipitate with a material of the type (X-R-Z)₂ wherein R is an aliphatic hydrocarbon radical having from 2 to 30 carbon atoms, X is an organosilane radical and Z is Sₙ where n is an integer of from 2 to 6.

17. The process of claim 16 wherein the material of the type (X-R-Z)₂ is bis-(3-triethoxysilylpropyl)tetrasulfide.

18. The process of any of the preceding claims wherein in step (G), after step (E), a functional group is grafted onto said reaction product or precipitate with a material of the formula: [(CH₃-CH₂-O)₃-Si-(CH₂)₃-S]₂.

19. The process of any of the preceding claims wherein in step (G), after step (E), a functional group is grafted onto said reaction product or precipitate by reacting with at least one of neodecanoic acid, octylcyanide, octylthiocyanide, n-butanol, butylamine, acetylacetone, adipic acid, hexane diol, pentanediamine, ethanolamine and 3-nitrilopropionic acid ester.

20. The process of any of the preceding claims wherein step (H) is required and said surfactant is selected from at least one of alkylbenzene sulfonate, alcohol sulfate, alcohol ether sulfate, alcohol ethoxylate, alkylphenol ethoxylate, fatty acid alkanolamine and fatty acid amine oxide.

21. An aggregate of particles obtainable by the process of any of claims 1-20.

22. The aggregate of particles of claim 21 having a BET surface area in a range of 100 to 500 m²/g, a CTAB surface area in a range of 100 to 300 m²/g, and an Hg pore size distribution for the primary particles of the aggregate with from 0 to 5 percent of its pores having a diameter of less than 10 nm, from 60 to 90 percent of its pores having a diameter of from 10 to 100 nm, from 10 to 30 percent of its pores having a diameter of from 100 to 1000 nm, and from 5 to 20 percent of its pores having a diameter greater than 1000 nm.

23. A rubber composition comprising (A) 100 parts by weight of at least one diene based elastomer, (B) 5 to 100 phr of at least one aggregate of claims 21 or 22 and (C) a silica coupler.

24. The rubber composition of claim 23 containing from 30 to 90 phr of said aggregate.

25. The rubber composition of claim 23 or 24 wherein said at least one diene based elastomer is selected from natural cis 1,4-polyisoprene rubber, synthetic cis 1,4-polyisoprene rubber, cis 1,4-polybutadiene rubber, styrene/butadiene copolymer rubber, butadiene/ isobutylene rubber, EPDM rubber, styrene/isoprene/butadiene terpolymer rubber, butadiene/acrylonitrile rubber, 3,4-polyisoprene rubber and isoprene/ butadiene copolymer rubber.

26. A pneumatic tire having a tread comprised of the rubber composition of any of claims 23-25.

27. The pneumatic tire of claim 26 wherein the aggregate material comprises
(i) 50 to 100 weight percent of an aggreate of any of claims 21-23 and
(ii) 0 to 50 weight percent of silica.

28. The pneumatic tire of claims 26 or 27 wherein the tread rubber composition comprises (D) 5-80 phr of carbon black.

29. The pneumatic tire of any of claims 26-28 wherein the weight ratio of the total of said aggregate and silica, if silica is used, to coupling agent is 7/1 to 15/1.

30. The pneumatic tire of any of claims 26-29 wherein the weight ratio of aggregate and silica, if silica is used, to carbon black is at least 0.1/1.

31. The pneumatic tire of any of claims 26-30 wherein the weight ratio of aggregate and silica, if silica is used, to carbon black is in a range of 3/1 to 30/1.

32. The pneumatic tire of any of claims 26-31 wherein the total of said aggregate and silica, if silica is used, and carbon black, if carbon black is used, is from 60 to 120 phr.

## Patentansprüche

1. Verfahren zur Herstellung eines Aggregats von Teilchen, umfassend die Schritte:
(A) Umsetzen von mindestens zwei anorganischen Materialien in Anwesenheit von Wasser mit einer starken Base zur Bildung einer wäßrigen Lösung eines Produkts davon, wobei die anorganischen Materialien, bezogen auf 100 Gew.-Teile davon, umfassen (1) 60 bis 99,9 Teile Siliciumdioxid und (2) 0,1 bis 40 Teile mindestens einer zusätzlichen anorganischen Materials, das in der Lage ist, die genannte wäßrige Lösung zu bilden, wobei das anorganische Material ausgewählt ist aus (i) Oxiden von Aluminium, Eisen, Magnesium, Bor, Titan, Zirkonium, Zink, Vanadium und Niob, (ii) Salzen von Aluminium, Eisen, Magnesium, Bor, Titan, Zirkonium, Zink, Vanadium und Niob als Phosphate, Sulfate und Halogenide und (iii) natürlichen und synthetisch hergestellten Aluminiumsilicaten,
(B) Behandeln der wäßrigen Lösung durch Zugabe einer Mineralsäure zur Reaktion mit dem genannten Produkt und Bildung eines Reaktionsprodukts und zur Reduzierung des pH-Werts der Lösung und dadurch Herstellen von ausgefällten Teilchen des Reaktionsprodukts als Niederschlag und
(C) gegebenenfalls Unterbrechen der Säurezugabe von Schritt (B) zu der wäßrigen Lösung, um den Niederschlag für einen Zeitraum altern zu lassen, bevor die Säurezugabe wieder aufgenommen wird, und anschließende Zugabe zusätzlicher Säure, bis ein gewünschter pH-Wert erreicht wird, um die Reaktion und die Ausfällung des Reaktionsprodukts zu vervollständigen,
(D) gegebenenfalls Alternlassen des Niederschlags für einen Zeitraum, nachdem die Säurezugabe von Schritt (B) und/oder Schritt (C), falls ausgeführt, vollständig ist,
(E) Filtrieren und Waschen des Niederschlags mit Wasser und Trocknen des Niederschlags, um die Primärteilchen in Form eines Aggregats mit Adsorptionswasser auf der Oberfläche der Teilchen des Aggregats zu gewinnen,
wobei das Verfahren zusätzlich mindestens einen der folgenden Schritte (F), (G) und (H) umfaßt:
(F) Behandeln des Niederschlags in Schritt (B) und/oder Schritt (C) durch Zugabe mindestens eines Elektrolyten mit einem Anion, das aus Carbonat, Silicat, Aluminat, Borat, Alumosilicat, Phosphat, Sulfat, Halogenid, Titanat und Zirkonat ausgewählt wird, und einem Kation, das aus mindestens einem von Lithium, Natrium, Kalium, Magnesium und/oder Calcium ausgewählt ist,
(G) Pfropfen mindestens einer funktionellen Gruppe und/oder eines Polymers auf das Reaktionsprodukt oder den Niederschlag während des Schritts (E) und/oder im Anschluß an Schritt (E) durch ein Verfahren der Reaktion zwischen den Silanolgruppen, Si-O-Si-Gruppen und/oder irgendwelchen anderen aktiven Stellen auf der Oberfläche davon, wobei die funktionelle Gruppe bereitgestellt wird durch Umsetzen mit mindestens einer Verbindung aus (i) einer Verbindung des Typs X und/oder X-R, (ii) einer Verbindung des Typs X-R-Y, (iii) einer Verbindung des Typs X-R-Z und/oder (X-R-Z )₂, worin R ein aliphatischer Kohlenwasserstoffrest mit 2 bis 30 Kohlenstoffatomen oder ein aromatischer oder Kohlenwasserstoff-substituierter aromatischer Rest mit 6 bis 30 Kohlenstoffatomen ist, X und Y die gleichen oder verschiedene Reste sind, die aus mindestens einem von Hydroxy-, Amino-, Alkoholat-, Cyanid-, Thiocyanid-, Halogen-, Sulfonsäure-, Sulfonsäureester-, Thiol-, Benzoesäure-, Benzoesäureester-, Carbonsäure-, Carbonsäureester- und Organosilan-Resten ausgewählt sind, und Z ein aus Sₙ und Seₙ, worin n eine ganze Zahl von 2 bis 6 ist, oder einem ungesättigten Rest, ausgewählt aus Allyl-, Vinyl-, Acryl- und Arylresten, ausgewählter Rest ist und (iv) einer Verbindung der Formel [(CH₃-CH₂-O)₃-Si-(CH₂)₃-S)]₂ und worin das Polymer ausgewählt ist aus mindestens einem aus natürlichem oder synthetischem cis-1,4-Polyisopren-Kautschuk, cis-1,4-Polybutadien-Kautschuk, Polystyrol, Polychloropren, Polyacrylnitril, Styrol/Butadien-Copolymerkautschuk, Butadien/Isobutylen-Copolymerkautschuk, EPDM-Kautschuk, Styrol/-lsopren/Butadien-Terpolymerkautschuk und Isopren/Butadien-Copolymerkautschuk,
(H) Behandeln des getrockneten Niederschlags im Anschluß an Schritt (E) mit mindestens einem ionischen und/oder nichtionischen Tensid.

2. Verfahren nach Anspruch 1, worin in Schritt (A) die starke Base Natriumhydroxid ist.

3. Verfahren nach Anspruch 2, worin in Schritt (A) das Siliciumdioxid mit Natriumhydroxid umgesetzt wird, um eine wäßrige Lösung eines Produkts davon zu bilden, und das mindestens eine zusätzliche anorganische Material in Reaktionsschritt (A) eingeführt wird, um ein Produkt zu bilden, wobei Siliciumatome teilweise ersetzt werden.

4. Verfahren nach irgendeinem der Ansprüche 1 bis 3, worin für Schritt (A) das zusätzliche anorganische Material aus mindestens einem der Oxide von Aluminium, Zink, Bor und Titan ausgewählt wird.

5. Verfahren nach irgendeinem der Ansprüche 1 bis 3, worin für Schritt (A) das zusätzliche anorganische Material Aluminiumsulfat ist.

6. Verfahren nach irgendeinem der vorhergehenden Ansprüche, worin die Mineralsäure Schwefelsäure ist.

7. Verfahren nach irgendeinem der vorhergehenden Ansprüche, worin Schritt (C) obligatorisch ist.

8. Verfahren nach Anspruch 7, worin man vor Wiederaufnahme der Säurezugabe den Niederschlag bei einer Temperatur im Bereich von etwa 15°C bis 50°C für einen Zeitraum von 7 bis 120 min altern läßt.

9. Verfahren nach irgendeinem der vorhergehenden Ansprüche, worin Schritt (D) obligatorisch ist.

10. Verfahren nach Anspruch 9, worin man den Niederschlag nach der Säurezugabe von Schritt (B) für einen Zeitraum altern läßt.

11. Verfahren nach Anspruch 9, worin man den Niederschlag nach der Säurezugabe von Schritt (C) für einen Zeitraum altern läßt.

12. Verfahren nach Anspruch 10 oder 11, worin man den Niederschlag bei einer Temperatur im Bereich von etwa 15°C bis 50°C für einen Zeitraum von 7 bis 180 min altern läßt.

13. Verfahren nach irgendeinem der vorhergehenden Ansprüche, worin Schritt (F) obligatorisch ist.

14. Verfahren nach Anspruch 13, worin während des Ausfällungsschrittes (B) eine Elektrolytbehandlung vorgesehen ist, worin der Elektrolyt ein aus Carbonat, Aluminat, Phosphat und Sulfat ausgewähltes Anion und ein aus Natrium und Kalium ausgewähltes Kation aufweist.

15. Verfahren nach Anspruch 13, worin während des Ausfällungsschrittes (C) eine Elektrolytbehandlung vorgesehen ist, worin der Elektrolyt ein aus Carbonat, Aluminat, Phosphat und Sulfat ausgewähltes Anion und ein aus Natrium und Kalium ausgewähltes Kation aufweist.

16. Verfahren nach irgendeinem der vorhergehenden Ansprüche, worin in Schritt (G) nach Schritt (E) eine funktionelle Gruppe auf das Reaktionsprodukt oder den Niederschlag mit einer Verbindung des Typs (X-R-Z)₂ gepfropft wird, worin R ein aliphatischer Kohlenwasserstoffrest mit 2 bis 30 Kohlenstoffatomen ist, X ein Organosilanrest ist und Z Sₙ ist, worin n eine ganze Zahl von 2 bis 6 ist.

17. Verfahren nach Anspruch 16, worin die Verbindung des Typs (X-R-Z)₂ Bis(3-triethoxysilylpropyl)tetrasulfid ist.

18. Verfahren nach irgendeinem der vorhergehenden Ansprüche, worin in Schritt (G) nach Schritt (E) eine funktionelle Gruppe auf das Reaktionsprodukt oder den Niederschlag mit einer Verbindung der Formel [(CH₃-CH₂-O)₃-Si-(CH₂)₃-S]₂ gepfropft wird.

19. Verfahren nach irgendeinem der vorhergehenden Ansprüche, worin in Schritt (G) nach Schritt (E) eine funktionelle Gruppe auf das Reaktionsprodukt oder den Niederschlag durch Umsetzen mit mindestens einer Verbindung aus Neodecansäure, Octylcyanid, Octylthiocyanid, n-Butanol, Butylamin, Acetylaceton, Adipinsäure, Hexandiol, Pentandiamin, Ethanolamin und 3-Nitrilopropionsäureester gepfropft wird.

20. Verfahren nach irgendeinem der vorhergehenden Ansprüche, worin Schritt (H) obligatorisch ist und das Tensid aus mindestens einem von Alkylbenzolsulfonat, Alkoholsulfat, Alkoholethersulfat, Alkoholethoxylat, Alkylphenolethoxylat, Fettsäurealkanolamin und Fettsäureaminoxid ausgewählt wird.

21. Aggregat von Teilchen, erhältlich durch das Verfahren nach irgendeinem der Ansprüche 1 bis 20.

22. Aggregat von Teilchen nach Anspruch 21 mit einer BET-Oberfläche im Bereich von 100 bis 500 m²/g, einer CTAB-Oberfläche im Bereich von 100 bis 300 m²/g und einer Hg-Porengrößenverteilung für die Primärteilchen des Aggregats, bei der 0 bis 5% dieser Poren einen Durchmesser von weniger als 10 nm, 60 bis 90% dieser Poren einen Durchmesser von 10 bis 100 nm, 10 bis 30% dieser Poren einen Durchmesser von 100 bis 1.000 nm und 5 bis 20% dieser Poren einen Durchmesser von mehr als 1.000 nm aufweisen.

23. Kautschuk-Zusammensetzung, umfassend (A) 100 Gew.-Teile mindestens eines Elastomers auf Dien-Basis, (B) 5 bis 100 ThK mindestens eines Aggregats nach den Ansprüchen 21 oder 22 und (C) einen Kieselsäure-Haftvermittler.

24. Kautschuk-Zusammensetzung nach Anspruch 23, die 30 bis 90 ThK des Aggregats enthält.

25. Kautschuk-Zusammensetzung nach Anspruch 23 oder 24, worin das mindestens eine Elastomer auf Dien-Basis aus cis-1,4-Polyisopren-Naturkautschuk, cis -1,4-Polyisopren-Synthesekautschuk, cis-1,4-Polybutadien-Kautschuk, Styrol/Butadien-Copolymerkautschuk, Butadien/Isobutylen-Kautschuk, EPDM-Kautschuk, Styrol/Isopren/Butadien-Terpolymerkautschuk, Butadien/ Acrylnitril-Kautschuk, 3,4-Polyisopren-Kautschuk und Isopren/Butadien-Copolymerkautschuk ausgewählt ist.

26. Luftreifen mit einer Lauffläche, die die Kautschuk-Zusammensetzung nach irgendeinem der Ansprüche 23 bis 25 umfaßt.

27. Luftreifen nach Anspruch 26, worin das Aggregatmaterial (i) 50 bis 100 Gew.-% eines Aggregats nach irgendeinem der Ansprüche 21 bis 23 und (ii) 0 bis 50 Gew.-% Kieselsäure umfaßt.

28. Luftreifen nach den Ansprüchen 26 oder 27, worin die Laufflächen-Kautschuk-Zusammensetzung (D) 5 bis 80 ThK Ruß umfaßt.

29. Luftreifen nach irgendeinem der Ansprüche 26 bis 28, worin das Gewichtsverhältnis der Gesamtheit des Aggregats und von Kieselsäure, falls Kieselsäure verwendet wird, zu Haftvermittler 7/1 bis 15/1 beträgt.

30. Luftreifen nach irgendeinem der Ansprüche 26 bis 29, worin das Gewichtsverhältnis von Aggregat und Kieselsäure, falls Kieselsäure verwendet wird, zu Ruß mindestens 0,1/1 beträgt.

31. Luftreifen nach irgendeinem der Ansprüche 26 bis 30, worin das Gewichtsverhältnis von Aggregat und Kieselsäure, falls Kieselsäure verwendet wird, zu Ruß im Bereich von 3/1 bis 30/1 liegt.

32. Luftreifen nach irgendeinem der Ansprüche 26 bis 31, worin die Gesamtheit von Aggregat und Kieselsäure, falls Kieselsäure verwendet wird, und Ruß, falls Ruß verwendet wird, 60 bis 120 ThK beträgt.

## Revendications

1. Procédé de production d'un agrégat de particules, qui comprend les étapes consistant à :
(A) faire réagir au moins deux matières minérales avec une base forte, en présence d'eau, pour former une solution aqueuse d'un produit dérivé desdites matières, lesdites matières minérales étant constituées, pour 100 parties en poids de matières, de (1) 60 à 99,9 parties de dioxyde de silicium et de (2) 0,1 à 40 parties d'au moins une matière minérale supplémentaire, capable de former ladite solution aqueuse et choisie parmi (i) les oxydes d'aluminium, de fer, de magnésium, de bore, de titane, de zirconium, de zinc, de vanadium et de niobium, (ii) les sels d'aluminium, de fer, de magnésium, de bore, de titane, de zirconium, de zinc, de vanadium et de niobium, par exemple les phosphates, les sulfates et les halogénures de ces éléments, et (iii) les silicates d'aluminium naturels ou synthétiques,
(B) traiter ladite solution aqueuse par addition d'un acide minéral pour faire réagir ledit acide avec ledit produit et former un produit de réaction dérivé du précédent et pour abaisser le pH de la solution et produire ainsi des particules précipitées du produit de réaction sous la forme de précipité,
(C) interrompre éventuellement ladite addition d'acide de l'étape (B) à ladite solution aqueuse pour laisser ledit précipité vieillir pendant une certaine période de temps avant de reprendre l'addition d'acide, puis ajouter de l'acide supplémentaire jusqu'à ce que le pH souhaité soit atteint afin d'achever ladite réaction et la précipitation du produit de réaction,
(D) éventuellement, une fois achevée ladite addition d'acide de l'étape (B) et/ou de l'étape (C) si elle est utilisée, laisser vieillir le précipité pendant un certain laps de temps,
(E) filtrer le précipité, le laver avec de l'eau et le sécher pour récupérer des particules primaires sous la forme d'un agrégat de particules ayant de l'eau d'adsorption à la surface des particules de l'agrégat,
ledit procédé comprenant en outre au moins l'une des étapes (F), (G) et (H) suivantes :
(F) traiter ledit précipité de l'étape (B) et/ou de l'étape (C) par addition d'au moins un électrolyte ayant un anion choisi parmi les anions carbonate, silicate, aluminate, borate, aluminosilicate, phosphate, sulfate, halogénure, titanate et zirconate, et un cation qui est au moins l'un des cations lithium, sodium, potassium, magnésium et calcium,
(G) greffer sur ledit produit de réaction ou précipité, pendant et/ou après l'étape (E), au moins un groupe fonctionnel et/ou un polymère, par un procédé de réaction avec les groupes silanol, les groupes Si-O-Si et/ou d'autres sites actifs quelconques, présents à la surface des particules, ledit groupe fonctionnel étant obtenu en faisant réagir avec lesdits groupes ou sites précédents au moins l'un des produits suivants : (i) un produit du type X et/ou du type X-R, (ii) un produit du type X-R-Y, (iii) un produit du type X-R-Z et/ou du type (X-R-Z)₂, R désignant un groupe hydrocarboné aliphatique, ayant 2 à 30 atomes de carbone, ou un groupe aromatique ou aromatique substitué par un groupe hydrocarboné, ayant 6 à 30 atomes de carbone, X et Y désignant des groupes identiques ou différents, choisis parmi les groupes hydroxyle, amino, alcoolate, cyanure, thiocyanate, halogène, acide sulfonique, ester d'acide sulfonique, thiol, acide benzoïque, ester d'acide benzoïque, acide carboxylique, ester d'acide carboxylique et organosilane, et Z désignant un groupe choisi parmi Sn et Sen où n désigne un nombre entier allant de 2 à 6, ou un groupe insaturé choisi parmi les groupes allyle, vinyle, acryle et aryle, et (iv) un produit de formule [(CH₃-CH₂-O)₃-Si-(CH₂)₃-S]₂,
et ledit polymère étant au moins l'un des produits suivants: caoutchouc de polyisoprène 1-4 cis, naturel ou synthétique, caoutchouc de polybutadiène 1-4 cis, polystyrène, polychloroprène, polyacrylonitrile, caoutchouc de copolymère de styrène et de butadiène, caoutchouc de copolymère de butadiène et d'isobutylène, caoutchouc EPDM, caoutchouc de terpolymère de styrène, d'isoprène et de butadiène et caoutchouc de copolymère d'isoprène et de butadiène,
(H) traiter ledit précipité séché, après l'étape (E), avec au moins un tensioactif ionique et/ou un tensioactif non ionique.

2. Procédé selon la revendication 1, dans lequel, dans l'étape (A), ladite base forte est l'hydroxyde de sodium.

3. Procédé selon la revendication 2, dans lequel, dans l'étape (A), on fait réagir ledit dioxyde de silicium avec l'hydroxyde de sodium pour former une solution aqueuse d'un produit dérivé, et l'on introduit dans ladite étape de réaction (A) ladite au moins une matière minérale supplémentaire pour former un produit dont les atomes de silicium sont partiellement remplacés par cette matière.

4. Procédé selon l'une quelconque des revendications 1 à 3, dans lequel, pour l'étape (A), on choisit ladite au moins une matière minérale supplémentaire parmi les oxydes d'aluminium, de zinc, de bore et de titane.

5. Procédé selon l'une quelconque des revendications 1 à 3, dans lequel, pour l'étape (A), ladite matière minérale supplémentaire est le sulfate d'aluminium.

6. Procédé selon l'une quelconque des revendications précédentes, dans lequel ledit acide minéral est l'acide sulfurique.

7. Procédé selon l'une quelconque des revendications précédentes, dans lequel l'étape (C) est nécessaire.

8. Procédé selon la revendication 7, dans lequel on laisse vieillir ledit précipité à une température comprise dans l'intervalle allant d'environ 15 °C à environ 50 °C, pendant une durée de 7 à 120 minutes, avant de reprendre l'addition d'acide.

9. Procédé selon l'une quelconque des revendications précédentes, dans lequel l'étape (D) est nécessaire.

10. Procédé selon la revendication 9, dans lequel, après ladite addition d'acide de l'étape (B), on laisse vieillir ledit précipité pendant un certain laps de temps.

11. Procédé selon la revendication 9, dans lequel, après ladite addition d'acide de l'étape (C), on laisse vieillir ledit précipité pendant un certain laps de temps.

12. Procédé selon la revendication 10 ou 11, dans lequel on laisse vieillir ledit précipité à une température comprise dans l'intervalle allant d'environ 15 °C à environ 50 °C, pendant une durée de 7 à 180 minutes.

13. Procédé selon l'une quelconque des revendications précédentes, dans lequel l'étape (F) est nécessaire.

14. Procédé selon la revendication 13, dans lequel on effectue un traitement par un électrolyte lors de l'étape de précipitation (B), ledit électrolyte ayant un anion choisi parmi les anions carbonate, aluminate, phosphate et sulfate et un cation choisi parmi les cations sodium et potassium.

15. Procédé selon la revendication 13, dans lequel on effectue un traitement par un électrolyte lors de l'étape de précipitation (C), ledit électrolyte ayant un anion choisi parmi les anions carbonate, aluminate, phosphate et sulfate et un cation choisi parmi les cations sodium et potassium.

16. Procédé selon l'une quelconque des revendications précédentes, dans lequel, dans l'étape (G), on greffe après l'étape (E) un groupe fonctionnel sur ledit produit de réaction ou précipité à l'aide d'un produit du type (X-R-Z)₂ où R désigne un groupe hydrocarboné aliphatique, ayant 2 à 30 atomes de carbone, X désigne un groupe organosilane et Z désigne Sₙ où n représente un nombre entier ayant une valeur de 2 à 6.

17. Procédé selon la revendication 16, dans lequel le produit du type (X-R-Z)₂ est le tétrasulfure de bis(3-triéthoxysilylpropyle).

18. Procédé selon l'une quelconque des revendications précédentes, dans lequel, dans l'étape (G), on greffe après l'étape (E) un groupe fonctionnel sur ledit produit de réaction ou précipité à l'aide d'un produit de formule [(CH₃-CH₂-O)₃-Si-(CH₂)₃-S]₂.

19. Procédé selon l'une quelconque des revendications précédentes, dans lequel, dans l'étape (G), on greffe après l'étape (E) un groupe fonctionnel sur ledit produit de réaction ou précipité par réaction avec au moins un composé pris parmi l'acide néodécanoïque, le cyanure d'octyle, le thiocyanate d'octyle, le n-butanol, la butylamine, l'acétylacétone, l'acide adipique, l'hexanediol, la pentanediamine, l'éthanolamine et les esters de l'acide 3-nitrilopropionique.

20. Procédé selon l'une quelconque des revendications précédentes, dans lequel l'étape (H) est nécessaire et ledit tensioactif est au moins un produit choisi parmi les alkylbenzènesulfonates, les sulfates d'alcool, les sulfates d'alcool éthérifié, les éthoxylates d'alcool, les éthoxylates d'alkylphénol, les alcanolamines dérivées d'acide gras et les oxydes d'amine dérivés d'acide gras.

21. Agrégat de particules que l'on peut obtenir par le procédé selon l'une quelconque des revendications 1 à 20.

22. Agrégat de particules selon la revendication 21, ayant une surface spécifique BET comprise dans l'intervalle allant de 100 à 500 m²/g, une surface spécifique CTAB comprise dans l'intervalle allant de 100 à 300 m²/g, et une distribution de la taille de pore des particules primaires de l'agrégat, déterminée à l'aide de mercure, qui est la suivante : 0 à 5 % des pores ont un diamètre inférieur à 10nm, 60 à 90 % des pores ont un diamètre de 10 à 100 nm, 10 à 30 % des pores ont un diamètre de 100 à 1 000 nm, et 5 à 20 % des pores ont un diamètre supérieur à 1 000 nm.

23. Composition pour caoutchouc, qui comprend (A) 100 parties en poids d'au moins un élastomère à base de diène, (B) 5 à 100 parties pour cent d'au moins un agrégat selon la revendication 21 ou 22, et (C) un agent de couplage de la silice.

24. Composition pour caoutchouc selon la revendication 23, qui contient 30 à 90 parties pour cent dudit agrégat.

25. Composition pour caoutchouc selon la revendication 23 ou 24, pour laquelle ledit au moins un élastomère à base de diène est choisi parmi le caoutchouc de polyisoprène 1-4 cis naturel, le caoutchouc de polyisoprène 1-4 cis synthétique, le caoutchouc de polybutadiène 1-4 cis, le caoutchouc de copolymère de styrène et de butadiène, le caoutchouc de copolymère de butadiène et d'isobutylène, le caoutchouc EPDM, le caoutchouc de terpolymère de styrène, d'isoprène et de butadiène, le caoutchouc de copolymère de butadiène et d'acrylonitrile, le caoutchouc de polyisoprène 3-4 et le caoutchouc de copolymère d'isoprène et de butadiène.

26. Pneu ayant une bande de roulement constituée de la composition pour caoutchouc selon l'une quelconque des revendications 23 à 25.

27. Pneu selon la revendication 26, pour lequel le matériau agrégat comprend (i) 50 à 100 % d'un agrégat selon l'une quelconque des revendications 21 à 23 et (ii) 0 à 50 % en poids de silice.

28. Pneu selon la revendication 26 ou 27, dont la composition pour caoutchouc de la bande de roulement comprend (D) 5 à 80 parties pour cent de noir de carbone.

29. Pneu selon l'une quelconque des revendications 26 à 28, pour lequel le rapport pondéral du total dudit agrégat et de la silice, si l'on utilise de la silice, à l'agent de couplage est de 7/1 à 15/1.

30. Pneu selon l'une quelconque des revendications 26 à 29, pour lequel le rapport pondéral de l'agrégat et de la silice, si l'on utilise de la silice, au noir de carbone est d'au moins 0,1/1.

31. Pneu selon l'une quelconque des revendications 26 à 30, pour lequel le rapport pondéral de l'agrégat et de la silice, si l'on utilise de la silice, au noir de carbone est compris dans l'intervalle allant de 3/1 à 30/1.

32. Pneu selon l'une quelconque des revendications 26 à 31, dans lequel le total dudit agrégat et de la silice, si l'on utilise de la silice, et du noir de carbone si l'on utilise du noir de carbone, représente 60 à 120 parties pour cent.
